# EUROPEAN PATENT APPLICATION

(11) **EP 4 147 847 A1**
(43) Date of publication of application: **15.03.2023**
(21) Application number: 21195622.2
(22) Date of filing: 08.09.2021
(51) Int. Cl.: B29C 44/20, B29C 44/44, C08J 9/18, C08J 9/16, C08J 9/22, C08J 9/232, C08J 9/24, B29L 31/10, B29K 75/00, B29L 31/00

(54) **PERMEABLE MOLDED BODY COMPRISING POLYURETHANE BEADS**

(71) Applicant: BASF SE, 67056 Ludwigshafen am Rhein (DE)
(72) Inventor: EISEMANN, Karsten, 67056 Ludwigshafen (DE)
(74) Representative: BASF IP Association

(57) **Abstract**

The present invention relates to the use of a molded body for a belt, cable connector, cable plugs, cable sleeves, chair, cladding, coating, cushion, damping element, escalator handrail, filter, gasket, hand rail for passenger conveyers, hose, insulating blanket, laminate, lounger, mattress, middle sole of a shoe, non woven fabric, packaging material, pillow, phone cover, plug connector, protective cord, protective film, protective hoses, roller, roofing, seat, sport mat, shoe, shoe sole, strap, laminate damping, profiles, plug-in connection, saddle, table, trailing cable, wherein the molded body
a. comprises thermoplastic polyurethane beads, which
iii. can be expanded or not; and
iv. are directly attached to one another leading to are directly attached to one another allowing a gas or a fluid to bypass the beads, and

and to a molded body comprising non-expanded thermoplastic polyurethane beads, wherein the beads are directly attached to one another allowing a gas or a fluid to bypass the beads, as well as respective production processes.

## Description

The present invention relates to the use of a molded body for a belt, cable connector, cable plugs, cable sleeves, chair, cladding, coating, cushion, damping element, escalator handrail, filter, gasket, hand rail for passenger conveyers, hose, insulating blanket, laminate, lounger, mattress, middle sole of a shoe, non woven fabric, packaging material, pillow, phone cover, plug connector, protective cord, protective film, protective hoses, roller, roofing, seat, sport mat, shoe, shoe sole, strap, laminate damping, profiles, plug-in connection, saddle, table, trailing cable, wherein the molded body
a. comprises thermoplastic polyurethane beads, which
   i. can be expanded or not; and
b. are directly attached to one another allowing a gas or a fluid to bypass the beads,
and to a molded body comprising non-expanded thermoplastic polyurethane beads, wherein the beads are directly attached to one another allowing a gas or a fluid to bypass the beads.

Molded bodies based on polyurethane are well known an achieved by different production methods. The polyurethane derives from at least the two components, isocyanate component and polyol component and is s formed in a mold either as foam, or as compact material.

Also expanded and expandable thermoplastic polyurethane foam beads are known (see e.g. WO 94/20568, WO 2007/082838 A1) and commercially available (for example Infinergy^{®}, BASF). These documents also describe the production of structures comprising thermoplastic polyurethane beads comprising blowing agent resulting in foam like materials.

A further example of a structure comprising expanded thermoplastic polyurethane beads, a mat is described in US20150237823A1A.

A huge variety of structures based on expanded thermoplastic polyurethane beads (Infinergy^{®}) are shown in a brochure documenting a cooperation project between BASF designfabrik and the University of Folkwang during winter term 2015/2016, including, but not limited to the production of flexible monolayer structures.

Composites comprising a bottom layer and a surface layer, wherein the bottom layer consists of a structure comprising expanded thermoplastic polyurethanes that are bonded to each other e.g. by an adhesive are described in WO 2018/206657. Respective composites are also offered and used as water permeable structures for outdoor floorings, wherein various embodiment comprises as underlayer an E-TPU structure, wherein the E-TPU beads are bonded to each other with a two component adhesive (see for example BASF product brochure "High performance flooring for sports fields and playgrounds", https://plastics-rubber.basf.com/asiapa-cific/en/performance_polymers/products/sportsflooring.html).

Water permeable structures comprising expanded thermoplastic polymers are known in the art as an element of artificial turf. An example is an artificial turf which is formed of a layer made of resilient, open cell, expanded bead polypropylene and a synthetic turf pile carpet of a woven cloth to which tufts are fastened is described in WO 98/56993.

Insulation and drainage panels using foamable and/or pre-foamed polystyrene particles and an organic binder with targeted adhesive cavity structures are known in the art (e.g. US20160297944A1).

Expanded thermoplastic polyurethanes that are bonded to each other so that a gap remains between the expanded beads are used in flooring applications. One example are composites comprising a bottom layer and a surface layer, wherein the bottom layer consists of a structure comprising expanded thermoplastic polyurethane particles that are bonded to each other e.g. by an adhesive are shown in and exemplified in WO 2018/206657. Another example are commercial products comprising expanded thermoplastic polyurethane particles with surface layer, which water-permeable, but can be produced also as water non-permeable (e.g. http://www.lek-platskonsulten.se/fallskydd/sureplay/). Flooring applications are further exemplified in EP patent application number 20171010 relating to an artificial turf, wherein the water permeable damping layer is made of a structure comprising expanded particle foam, preferably expanded thermoplastic polyurethane beads. Herein, the particles are connected to each other by gluing or welding, i.e. the latter requiring exposing the expanded beads into a mold and subjecting them to steam and pressure to connect the beads in a way that a gap remains between the beads to allow draining of water which is particularly preferred in case the artificial turf is used in outdoor applications to avoid forming puddles on the artificial turf.

One disadvantage of layers which may require water permeability, so far is their production in field which for this specific application may be an advantage. Whereas, there is an increasing but unmet request for applications, where permeability to fluids, e.g. water, and/or gas, e.g. air would be required.

### Detailed description of the invention

Surprisingly a very broad spectrum of new applications respectively applications with improved properties become available by molding beads comprising thermoplastic polyurethane in a way that a fluid or a gas can bypass the beads. The product of this molding process is also referred to as molded body. Preferred fluids are water, a preferred gas is air.

Thus, the present invention relates to the use of a molded body for a belt, cable connector, cable plugs, cable sleeves, chair, cladding, coating, cushion, damping element, escalator handrail, filter, gasket, hand rail for passenger conveyers, hose, insulating blanket, laminate, lounger, mattress, middle sole of a shoe, non woven fabric, packaging material, pillow, phone cover, plug connector, protective cord, protective film, protective hoses, roller, roofing, seat, sport mat, shoe, shoe sole, strap, laminate damping, profiles, plug-in connection, saddle, table, trailing cable, wherein the molded body comprises thermoplastic polyurethane beads, which
i. can be expanded or not; and
ii. are directly attached to one another allowing a gas or a fluid to bypass the beads.

The present invention also relates in a further embodiment to a molded body, comprising non-expanded thermoplastic polyurethane beads, wherein the beads are directly attached to one another so that a gas or a fluid can bypass the beads (hereinafter also referred to as "compact molded body").

In a preferred embodiment, the beads in the molded body are directly attached to each other in the form of a three-dimensional network.

Hereinbelow, a molded body, comprising expanded thermoplastic polyurethane beads, wherein the beads are directly attached to one another so that a gas or a fluid can bypass the beads is also referred to as "expanded molded body".

The term "molded body" refers to both embodiments, an expanded molded body and a compact molded body as the case may be.

### Advantages

The arrangement of the molded body, where a fluid or gas can bypass the beads is an advantage in many applications. A further advantage of the inventive molded body is the reduction of weight, compared to a molded body where there is no space between the beads. This also reduces material costs.

At the same time the bypass of gas, such as air is an advantage for much of application e.g. mattress of seats become breathable. In addition these molded bodies can easily be washed. Additionally the inventive molded bodies have advantages in biodegradation, since they have a large surface compared with compact molded bodies. Furthermore, the properties of the molded body can be easily adapted by adding beads with different properties at different places of the molded body. Properties are such as mechanical properties, chemical properties or even colors.

### Further particles/beads

In one preferred embodiment particles or beads not comprising thermoplastic polyurethane are embedded in the molded body beside the beads comprising thermoplastic polyurethane. This may be done to affect the properties of the molded body either locally or homogeneously. These additional beads also allow additives to be integrated in the molded body. This is especially advantageous, if this additive is not compatible with the thermoplastic polyurethane in the beads or would negatively affect the properties of the beads or inhibiting expanding of the beads comprising thermoplastic polyurethane.

The molded body is preferably produced industrially. Industrially means, that the production process is continuous or the same mold forming the molded body is filled several times with beads. This results in a series of identical looking molded bodies.

The term "thermoplastic polyurethane beads" refers to beads that comprise thermoplastic polyurethane, but also includes beads comprising a thermoplastic polyurethane composition. The term "composition" implies, that the composition may not comprise a thermoplastic polyurethane only, but may comprise other polymers, additives and/or auxiliaries beside the thermoplastic polyurethane.

The term "beads" refers to particles which derive from a mass production process. The normal and preferred way of producing beads is cutting strands of thermoplastic polyurethane composition into pieces with length comparable with the diameter of the strand. Comparable means that the maximal extension of the pieces is less than 5fold the smallest extension of the bead, preferably less than 3fold and more preferably less than 2fold. Thermoplastic polyurethane, if hot enough, can be processed further so that the pieces become round edges. Therefore, in preferred embodiments the beads have egg-shaped sections, elliptic sections, or round sections, or mixtures thereof. In other preferred embodiments the beads are small parts of a tube. The polyurethane strands in preferred embodiments are fed into water. This e.g. smooths the surface of the beads.

In preferred embodiments the maximal diameter of the bead is from 0.1 mm to 100 mm, preferably from 0.1 mm to 50 mm and in particular from 1 mm to 12 mm.

The molded body in preferred embodiment comprising all features of the precedent embodiment or any of their preferred embodiments can be used in the applications selected from the group consisting of belt, cable connector, cable plugs, cable sleeves, chair, cladding, coating, cushion, damping element, escalator handrail, filter, gasket, hand rail for passenger conveyers, hose, insulating blanket, laminate, lounger, mattress, middle sole of a shoe, non woven fabric, packaging material, pillow, phone cover, plug connector, protective cord, protective film, protective hoses, roller, roofing, seat, sport mat, shoe, shoe sole, strap, laminate damping, profiles, plug-in connection, saddle, table, and trailing cable.

A preferred application for roller are rollers for cars, skate boards, scooters, or bicycles. A preferred cladding is for automobile.

A preferred application is roofing. Herein the molded body preferably comprises expanded polyurethane beads.

In yet another embodiment the thermoplastic polyurethane beads for the use in roofing are attached to each other, as described herein in detail, on-site, either using a mold or not using a mold. In one preferred embodiment the beads are attached to each other directly on the roof. In a preferred embodiment the thermoplastic polyurethane beads, preferably the expanded thermoplastic polyurethanes beads, are used for roofing. This use is either based on molded bodies as described and preferred herein, or, also preferred, on thermoplastic polyurethane beads attached to each other on-site, preferably directly on the roof. In preferred embodiments a mold is used on the roof in others no mold is used.

More preferably, the molded body is used in the applications selected from the group consisting of chair, cushion, damping element, filter, insulation blanket, lounger, mattress, seat, sport mat, shoe, shoe sole, saddle, table, and trailing cable.

In a further preferred embodiment, the molded body is used in the applications selected from the group consisting of cushion, damping element, filter, insulation blanket, mattress shoe sole is a layer. A layer means that the respective mold has at least a bottom and a frame with at least facing edges.

More preferably, the molded body is used in the applications selected from the group consisting of a mattress, seat, chair, lounger or insulating blanket.

A molded body suitable for the respective use as outlined and preferred above is another embodiment of this invention.

The present invention also relates to a compact molded body selected from the group consisting of belt, cable connector, cable plugs, cable sleeves, chair, cladding, coating, cushion, damping element, escalator handrail, filter, gasket, hand rail for passenger conveyers, hose, insulating blanket, laminate, lounger, mattress, middle sole of a shoe, non-woven fabric, packaging material, pillow, phone cover, plug connector, protective cord, protective film, protective hoses, roller, seat, sport mat, shoe, shoe sole, strap, laminate damping, profiles, plug-in connection, saddle, table, trailing cable, wherein preferred rollers are a rollers for a cars, skate boards, scooters, or bicycles, and preferred cladding is for automobile.

More preferably, the compact molded body is used in the applications selected from the group consisting of chair, cushion, damping element, filter, insulation blanket, lounger, mattress, seat, sport mat, shoe, shoe sole, saddle, table, and trailing cable.

In a further preferred embodiment, the compact molded body is selected from the group consisting of cushion, damping element, filter, insulation blanket, mattress shoe sole, or is a layer. A layer means that the respective mold has at least a bottom and a frame with at least facing edges.

More preferably, the compact molded body is selected from the group consisting of a mattress, seat, chair, lounger or insulating blanket.

Thermoplastic polyurethanes are well known in the art.

The thermoplastic polyurethane, is prepared by reacting (a) an isocyanate, preferably an diisocyanate, with (b) a compound reactive with isocyanate, in a preferred embodiment a polyol, and, if desired a chain extender (c). The chain extender preferably has a molecular weight of from 0.05 × 10³ g /mol to 0.499 × 10³ g /mol, if desired in the presence of (d) a catalyst and/or (e) an auxiliary and/or an additive. The compound reactive with isocyanate preferably has two functional groups reactive with isocyanate, more preferably is a diol. The compound reactive with isocyanate preferably has a number average molecular weight of from 0.5 × 10³ g /mol to 100 × 10³ g /mol, preferably from 0.5 × 10³ g/mol to 10 × 10³ g/mol.

The expression thermoplastic polyurethane comprises linkage of the polymer by allophanate, biuret, urethdion, or urea groups as well.

The components (a) isocyanate, (b) compound reactive with isocyanate, in a preferred embodiment polyol are, and (c) chain extenders are also referred to individually or together as building components. In some preferred embodiments water is used for the preparation of the thermoplastic polyurethane and then is referred to as building component as well. The building components including the catalyst and/or the auxiliary and/or the additive are also called input materials.

The molar ratios of the quantities of the build-up components (b) and chain extender (c) used can be varied to adjust the hardness and if the melt viscosity., whereby the hardness and melt viscosity increase with increasing content of chain extender (c), while the melt flow index decreases.

For the production of thermoplastic polyurethane, the compound reactive with isocyanate is polyols (b), also referred to as diols, and the chain extender (c), if used also the water, may advantageously be used in mole ratios of 1:1 to 1:5, preferably 1:1.5 to 1:4.5, such that the resulting mixtures of the structural components (b) and (c) have a hydroxyl equivalent weight of greater than 200, and in particular from 230 to 450, while for the production of harder TPU, z.B. those having a Shore A hardness greater than 98 Shore A, preferably 55 to 75 Shore D, the molar ratios of (b):(c) being in the range of 1:5.5 to 1:15, preferably 1:6 to 1:12, such that the resulting mixtures of (b) and (c) have a hydroxyl equivalent weight of 110 to 200, preferably 120 to 180.

In order to prepare the thermoplastic polyurethane, the building components isocyanate (a), compound reactive with isocyanate (b), in a preferred embodiment also the chain extender (c), if applicable in the presence of water, in preferred embodiments are reacted in the presence of a catalyst (d), and optionally auxiliaries and/or additives (e) in such quantities that the equivalent ratio of NCO groups of the diisocyanates (a) to the sum of the groups reactive with isocyanate, preferably hydroxyl groups of the components (b) and if applicable (c), if used also the water, is 0.95 to 1.10:1, preferably 0.98 to 1.08:1 and in particular approximately 1.0 to 1.05:1.

Thermoplastic polyurethane, has preferably a weight-average molecular weight of at least 0.1×10⁶ g/mol, preferably of at least 0.4 × 10⁶ g/mol and in particular of at least 0.6 ×10⁶ g/mol. The upper limit for the weight-average molecular weight of TPU is generally determined by the processability and the desired range of properties. Preferably the weight-average molecular weight does not exceed 0.8 ×10⁶ g/mol. The mean molecular weights and the weight-average molecular weight as outlined herein are determined by gel permeation chromatography.

To modify the mechanical properties of the thermoplastic polyurethane, difunctional chain extenders and or tri- and higher-functional crosslinking agents or optionally mixtures thereof are also preferably used.

The number average molecular weight Mn in the context of this invention is determined by gel permeation chromatography, preferably it is determined according to DIN 55672-1.

### Isocyanate

The isocyanate preferably is an organic isocyanate. Further preferred the isocyanate is selected from the group consisting of aliphatic, cycloaliphatic, araliphatic and aromatic isocyanates, or is a mixture thereof.. More preferred the isocyanate is a diisocyanate. The isocyanate more preferably is selected from the group comprising tri-, tetra-, penta-, hexa-, hepta- and/or octamethylene diisocyanate, 2-methyl-pentamethylene 1,5-diisocyanate, 2-ethyl-butylene-1,4-diisocyanate, 1,5-pentamethylene diisocyanate (PDI), 1,4- butylene-diisocyanate, 1-isocyanato-3,3,5-trimethyl-5-isocyanatomethyl-cyclohexane (isophorone diisocyanate, IPDI), 1,4- bis(isocyanatomethyl)cyclohexane and/or 1,3-bis(isocyanatomethyl)cyclohexane (HXDI), 2,4-para-phenylene diisocyanate (PPDI), 2,4-tetramethylene xylene diisocyanate (TMXDI), 4,4'-, 2,4'- and 2,2'-dicyclohexylmethane diisocyanate (H12 MDI), 1,6-hexamethylene diisocyanate (HDI),1,4-cyclohexane diisocyanate, 1-methyl-2,4- and/or-2,6-cyclohexane diisocyanate, 2,2'-, 2,4'- and/or 4,4'-diphenylmethane diisocyanate (MDI), 1,5-naphthylene diisocyanate (NDI), 2,4- and/or 2,6-toluene diisocyanate (TDI), 3,3'-dimethyl-diphenyl diisocyanate, 1,2-diphenylethane diisocyanate and/or phenylene diisocyanate, or is a mixture thereof.

Aliphatic isocyanates are preferred when stability against electromagnetic waves e.g. light is of importance, whereas aromatic polyisocyanate is preferred when high mechanical strength of the thermoplastic polyurethane is required.

A very preferred aromatic isocyanate is 2,2'-, 2,4'- and/or 4,4'-diphenylmethane diisocyanate (MDI), especially preferred is 4,4'-diphenylmethane diisocyanate.

A very preferred aliphatic isocyanate is 1,5-pentamethylene diisocyanate. This has the additional advantage, that it can be produced bio based.

### Isocyanate reactive compound

The isocyanate-reactive compound (b) has on statistical average between 1.8 and 2.6, further preferred between 1.9 and 2.2 and especially preferred 2, Zerewitinoff-active hydrogen atoms, this number is also referred to as the functionality of the isocyanate-reactive compound (b) and indicates the quantity of the isocyanate-reactive groups of the molecule calculated theoretically down to one molecule from a quantity of substance.

The compounds with at least two hydrogen atoms (b) which are reactive towards isocyanate also include the chain extenders, in a preferred embodiment water.

Isocyanate-reactive compounds (b) preferably have a molecular weight between 0.5 × 10³ g/mol and 8 ×10³ g/mol, preferably 0.7 × 10³ g/mol to 6.0 × 10³ g/mol, in particular 0.8 × 10³ g/mol to 4.0 × 10³ g/mol.

The isocyanate-reactive compound is either linear or branched. In some embodiments branched compounds are preferred in other embodiments linear compounds are preferred. In yet other preferred embodiments a mixture of different isocyanate reactive compounds meets the requirements of specific applications.

The isocyanate-reactive compound is used with a content of 1 mol% equivalent to 80 mol% equivalent, based on the isocyanate group content of the polyisocyanate.

The isocyanate reactive compound (b) preferably has a reactive group selected from the hydroxyl group, the amino group, the mercapto group or the carboxylic acid group. The preferred group is the hydroxyl group. These compounds are also referred to as polyol or polyhydroxy polyol. The polyol (b) preferably is selected from the group consisting of polyesterols, polyether-ols or polycarbonate diols, more preferred from the group consisting of polyether polyol and polycarbonate. Particularly preferred is polyether polyol. More preferably the polyol is a diol.

### Polyetherol

Preferred polyether polyols are polyether diols, further preferred are those based on ethylene oxide, propylene oxide and/or butylene oxide. Polyetherpolyol has the advantage that it is more stable against hydrolysis and will be applied in applications where this is a requirement.

Another preferred polyether is polytetrahydrofuran (PTHF). In a preferred embodiment the polytetrahydrofuran has a number average molecular weight between 0,6 × 10³ g/ Mol and 1,7 × 10³ g/ Mol determined according to DIN 55672-1, more preferably with a number average molecular weight between 0,8 × 10³ g/ Mol and 1,4 × 10³ g/ Mol, even more preferably with a number average molecular weight between 0,9 × 10³ g/ Mol and 1,1 × 10³ g/ Mol, and most preferably 1,0 × 10³ g/Mol.

The number average molecular weight Mn in the context of this invention is preferably determined according to DIN 55672-1.

### Polyesters

In another preferred embodiment the polyol is a polyester, more preferably a polydiester, selected from the following group: copolyesters based on adipic acid, succinic acid, pentanedioic acid, sebacic acid or mixtures thereof and mixtures of 1,2-ethanediol and 1,4-butanediol, copolyesters based on adipic acid, succinic acid, pentanedioic acid, sebacic acid or mixtures thereof and diols selected from the group of 1,4-butanediol and 1,6-hexanediol, 3-methyl-1,5-pentanediol and/or polytetramethylene glycol (polytetrahydrofuran, PTHF) or are mixtures thereof. Particularly preferably copolyester are based on succinic acid and mixtures of 1,2-ethanediol and 1,4-butanediol or polyester based on adipic acid, succinic acid, pentanedioic acid, sebacic acid or mixtures thereof and polytetramethylene glycol (PTHF) or mixtures thereof.

Polyesters have less stability against hydrolysis and are preferred in applications where biodegradability is required.

### Polyacarbonatdiol

In another preferred embodiment the compound (b) which is reactive with isocyanates, is a polycarbonate diol, preferably an aliphatic polycarbonate diol. Preferred polycarbonate diols are, for example, polycarbonate diols based on alkanediols. Preferred polycarbonate diols are strictly difunctional OH-functional polycarbonate diols, preferably strictly difunctional OH-functional aliphatic polycarbonate diols. Preferred polycarbonate diols are based on butanediol, pentanediol or hexanediol, in particular 1,4-butanediol, 1,5-Pentanediol, 1,6-Hexanediol, 3-Methylpentane-(1,5)-diol, or are mixtures thereof, in particular preferably 1,4-butanediol, 1,5-pentanediol, 1,6-hexanediol, or mixtures thereof. Most preferred in the present invention are polycarbonate diols based on butanediol and hexanediol, polycarbonate diols based on pentanediol and hexanediol, polycarbonate diols based on hexanediol, and mixtures of two or more of these polycarbonate diols.

Preferably, the polycarbonate diols used have a number average molecular weight Mn in the range from 0.5 × 10³ to 4.0 × 10³ g/mol, determined via GPC, preferably in the range from 0.65 × 10³ g/ mol to 3.5 × 10³ g/mol determined via GPC, particularly preferred in the range from 0.8 × 103 g/mol to 3.0 × 10³ g/mol, determined via GPC.

Polycarbonatediols have better permeability for microwave, less dirt uptake and show better flame retardancy

### Polysiloxanediol

In another preferred embodiment the polyol is a polysiloxane diol. These polyols are preferred where dirt uptakes plays a role.

Preferably the oligo- or polysiloxane has the formula (I):

HO-[Ak-O]_{q}-Ak-Si(R₂)-[O-Si(R₂)]ₚ-O-Si(R₂)-Ak-[O-Ak]_{q'}-OH formula (I)

wherein Ak preferably represents C₂-C₄ alkylene, R represents C₁-C₄ alkyl, and each of p, q and q' independently is a number selected from the range of 0 to 50. In more preferred moieties (B) of formula (I), p ranges from 1 to 50, especially from 2 to 50.

In one preferred embodiment Ak represents identical alkylene units in each residue (C1), in yet another preferred embodiment Ak represents different alkylene units in the same residue (C1). In one preferred embodiment Ak is ethylene or propylene within the same residue (C1).

One preferred polydimethylsiloxane diol has formula (II) 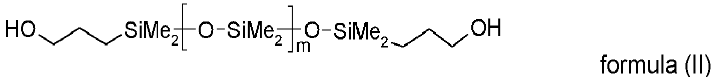
with m in the range from 5 to 80,
or has formula (III)

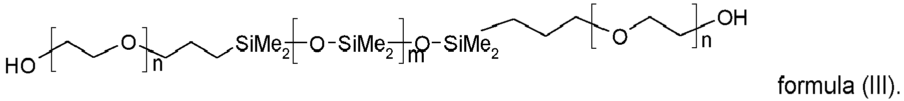

The molecular weight is preferably between 0,500 × 10³ g/Mol and 15 × 10³ g/Mol, more preferred between 1,0 × 10³ g/Mol and 3,0 × 10³ g/Mol.

### Mixture of polyol

In one preferred embodiment the polyol is a mixture of two or more polyols. In one preferred embodiment it is a mixture of at least one polyether polyol and at least one polycarbonate diol.

In a case of using a mixture of polyether polyols and polycarbonate diols, polycarbonate diols preferably are used in an amount of less than 50 % by weight, preferably less than 35 % by weight, more preferably less than 15 % by weight, and most preferably less than 5 % by weight, based on the total weight of the polyol mixture.

### Chain extender

In preferred embodiments chain extenders (c) are used the synthesis of the thermoplastic polyurethane. The chain extender is preferably aliphatic, araliphatic, aromatic and/or cycloaliphatic compounds with a molecular weight of 0.05 × 10³ g/mol to 0.499 × 10³ g/mol, preferably with 2 groups reactive with isocyanate, which are also referred to as functional groups. The chain extender is either a single chain extender or a mixture of at least two chain extenders.

The chain extender is preferably a difunctional compound, preferred examples being diamines or alkanediols having 2 to 10 carbon atoms in the alkylene radical, or a mixture thereof.

In a preferred embodiment the chain extender (c) is selected from the group consisting of 1,2-ethylene glycol, 1,2-propanediol, 1,3-propanediol, 1,4-butanediol, 2,3-butanediol, 1,5-pentanediol, 1,6-hexanediol, diethylene glycol, di-, tri-, tetra-, penta-, hexa-, hepta-, okta-, nona- and/or deca alkylene glycole dipropylene glycol, 1,4-cyclohexanediol, 1,4-dimethanol cyclohexane, neopentylglycol and hydroquinone bis (beta-hydroxyethyl) ether (HQEE), or is a mixture thereof. Preferably the chain extender selected from the group consisting of 1,2-ethylene glycol, 1,3-propanediol, 1,4-butanediol, and 1,6-hexanediol, di-, tri-, tetra-, penta-, hexa-, hepta-, okta-, nona- and/or deca alkylene glycole, preferably respective oligo- and/or polypropylene glycole, or is a mixture thereof.

Particularly preferred chain extender is 1,3-propanediol, 1,4-butanediol or 1,6-hexanediol.

### Catalyst

Catalysts (d) which, in particular, accelerate the reaction between the NCO groups of the iisocyanates (a) and the hydroxyl groups of the compound, which is reactive with isocyanate, in a preferred embodiment also referred to as polyol, and the chain extenders (c), in a preferred embodiment is selected from the group consisting of tertiary amines and organic metal compound, or is a mixture thereof.

A preferred tertiary amine is selected from the group consisting of triethylamine, dimethylcyclo-hexylamine, N-methylmorpholine, N,N'-dimethyl-piperazine, 2-(dimethylaminoethoxy)ethanol, diazabicyclo[2.2.octane] or is a mixture thereof;

A preferred organic metal compound is selected from the group consisting of titanic ester, iron compound, tin compound, and bismuth salt, or is a mixture thereof. A preferred iron compound is iron(III) acetylacetonate. A preferred tin compound is selected from the group consisting of tin diacetate, tin dioctoate, tin dilaurate and dialkyl tin salts of aliphatic carboxylic acids, preferably tin dioctoate, or is a mixture thereof. A preferred titanic ester is tetrabutyl orthotitanate. In preferred bismuth salts, the bismuth is present in the oxidation states 2 or 3, in particular 3, with preference being given to salts of carboxylic acids, preferably carboxylic acids having from 6 to 14 carbon atoms, particularly preferably from 8 to 12 carbon atoms. A very preferred bismuth salt is bismuth(III) neodecanoate, bismuth 2-ethylhexanoate, or bismuth octanoate, or is a mixture thereof.

The catalysts (d) is preferably used in an amount of from 0.0001 to 0.1 part by weight per 100 parts by weight of the compound (b), also referred to as polyol, which is reactive toward isocyanates. Preference is given to using tin catalysts, in particular tin dioctoate.

A very preferred catalyst is SDO (tin (II) 2-ethylhexanoate), preferably used in quantities of 0.35-0.4 parts per weight, referring to the composition.

### Blowing agent

Blowing agents are auxiliaries. A preferred blowing agent is water, which reacts with isocyanate groups to release carbon dioxide.

In other preferred embodiments, so-called physical blowing agents are used in combination with or instead of water. These are compounds which are inert to the feed components, are usually liquid at room temperature and evaporate under the conditions of the urethane reaction. Preferably, the boiling point of the physical blowing agents is below 50 °C. Physical blowing agents also include compounds which are gaseous at room temperature and are introduced into or dissolved in the feed components under pressure, some preferred representatives being carbon dioxide, low-boiling alkanes and fluoroalkanes.

Preferably, the physical blowing agents are selected from the group comprising alkanes and/or cycloalkanes having at least 4 carbon atoms, dialkyl ethers, esters, ketones, acetals, fluoroalkanes having 1 to 8 carbon atoms, and tetraalkylsilanes having 1 to 3 carbon atoms in the alkyl chain, in particular tetramethylsilane

Other preferred physical blowing agents are propane, n-butane, iso- and cyclobutane , n-, iso- and cyclopentane, cyclohexane, dimethyl ether, methyl ethyl ether, methyl butyl ether, methyl formate, acetone, and fluoroalkanes, which can be degraded in the troposphere and are therefore harmless to the ozone layer, such as trifluoromethane, difluoromethane, 1,1,1,3,3-pen-tafluorobutane, 1,1,1,3,3-pentafluoropropane, 1,1,1,2-tetrafluoroethane, difluoroethane and heptafluoropropane.

The above physical blowing agents may be used alone or in any combination with each other

### Flame Retardant

Flame retardants are further important auxiliaries for a lot of applications.

In on preferred embodiment comprising all features of any of the precedent embodiments or one of their preferred embodiments the bead also comprises at least one flame retardant.

A preferred of flame retardant is a nitrogen based compound selected from the group consisting of benzoguanamine, tris(hydroxyethyl)isocyanurate, isocyanurate, allantoin, glycoluril, melamine, melamine cyanurate, melamine polyphosphate, dimelamine phosphate, melamine pyrophosphate, melamine borate, ammonium polyphosphate, melamine ammonium polyphosphate, melamine ammonium pyrophosphate, condensation product of melamine selected from the group consisting of melem, melam, melon and higher condensed compounds and other reaction products of melamine with phosphoric acid, melamine derivatives .

More preferably, the flame retardant is selected from the group consisting of melamine, melamine cyanurate, melamine polyphosphate, dimelamine phosphate, melamine pyrophosphate, melamine borate, ammonium polyphosphate, melamine ammonium polyphosphate, melamine ammonium pyrophosphate, and melamine derivatives.

Most preferably, the flame retardant is selected from the group consisting of melamine, melamine cyanurate, melamine borate, melamine polyphosphate and melamine derivatives. In very preferred embodiment, the flame retardant (B) is melamine cyanurate. Melamine cyanurate is hereinafter interchangeably referred to as 1,3,5-triazine-2,4,6(1H,3H,5H)-trione.

Ammonium polyphosphate is in principle known and described in the state of the art as a flame retardant. Suitable flame retardants are for example ammonium orthophosphates, e.g. NH₄H₂PO₄, (NH₄)₂HPO₄ or mixtures of these, ammonium diphosphates, e.g. NH₄H₃P₂O₇, (NH₄)₂H₂P₂O₇, (NH₄)₃HP₂O₇, (NH₄)₄P₂O₇ or mixtures of these, ammonium polyphosphates, in particular but not exclusively those found in J. Am. Chem. Soc. 91, 62 (1969). The ammonium phosphate component may or may not be coated. Suitable coated ammonium polyphosphates are for example described in US 4,347,334, US 4,467,056, US 4,514,328, and US 4,639,331.

In a preferred embodiment the flame retardant is a combination of more than one flame retardant, either of the same kind or of different kinds.

Another kind of flame retardant is an anorganic flame retardant and is preferably selected from the group consisting of magnesium oxide, magnesium hydroxide, silicon oxide, and aluminum oxide.

Yet another kind of flame retardant is a phosphorus containing flame retardant. The phosphorus containing flame retardant preferably is liquid at 21°C.

Preference is given to derivatives of the phosphoric acid, derivatives of the phosphonic acid, or derivatives of the phosphinic acid, or a mixture of two or more of said derivatives.

It is preferable that the derivatives of the phosphoric acid, phosphonic acid, or phosphinic acid involve salts with an organic or an inorganic cation or involve organic esters. In one preferred embodiment, the organic ester involves an alkyl ester, and in another preferred embodiment it involves an aryl ester. It is particularly preferable that all the hydroxy groups of the corresponding phosphorus-containing acid have been esterified.

Organic phosphate esters are preferred, particularly the triesters of phosphoric acid, more preferred are the trialkyl phosphates. Other preferred embodiments are triaryl phosphates, especially preferred is triphenyl phosphate.

In another embodiment, the phosphoric esters has the general formula (I) 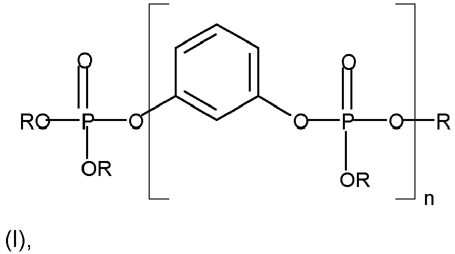 , where R denotes substituted alkyl, cycloalkyl, or phenyl groups, and n is a real number in the range of ≥ 1 to ≤ 15.

If R in the general formula (I) is an alkyl moiety, alkyl moieties that preferably are used are those having from 1 to 8 carbon atoms. The cyclohexyl moiety may be mentioned as a preferred example of the cycloalkyl groups. It is preferable to use phosphoric esters of the general formula (I) in which R denotes a phenyl or alkyl-substituted phenyl. Preferably, n is 1, or in the range of ≥ 3 to ≤ 6. Very preferred phosphoric esters of the general formula (I) are bis(diphenyl) 1,3-phenylenephosphate, bis(dixylenyl) 1,3-phenylenephosphate, and also the corresponding oligomeric products, preferably with an average degree of oligomerization of n in the range of ≥ 3 to ≤ 6.

A very preferred phosphoric ester is resorcinol, more preferred resorcinol bis(diphenyl phosphate) (RDP). RDP preferably is present in oligomers.

Other preferred phosphorus containing flame retardants are bisphenol A bis(diphenyl phosphate) (BDP). and diphenyl cresyl phosphate (DPC). BPD usually takes the form of an oligomer.

The organic phosphates involve salts with an organic or inorganic cation or involve the esters of phosphonic acid. Preferred esters of phosphonic acid are the diesters of alkyl- or phenylphosphonic acids.

### Phosphinic esters

Other preferred phosphorus contain flame retardants are phosphinic esters having the general formula R₁R₂(P=O)OR₃, where all three organic groups R₁, R₂ and R₃ in one preferred embodiment are identical or in another preferred embodiment are different from each other. The moieties R₁, R₂ and R₃ are in one preferred embodiment aliphatic in another preferred embodiment aromatic, and more preferably have from 1 to 20 carbon atoms, more preferably from 1 to 10. In one preferred embodiment the aliphatic moiety has from 1 to 3 carbon atoms. It is preferable that at least one of the organic moiety is aliphatic, and it is more preferable that all of the organic groups are aliphatic. In one preferred embodiment R₁ and R₂ are ethyl moieties, more preferably in this embodiment R₃ is also an ethyl radical or is a methyl radical. In one preferred embodiment, R₁, R₂ and R₃ are simultaneously either an ethyl radical or a methyl radical.

### Phoshinates

Preference is also given to phosphinate, which is the salt of phosphinic acid. The groups R₁ and R₂ are either aliphatic or aromatic, and have from 1 to 20 carbon atoms, preferably from 1 to 10, more preferably from 1 to 3. It is preferable that at least one of the moieties is aliphatic, and it is preferable that all the moieties are aliphatic, and it is very particularly preferable that R₁ and R₂ are ethyl groups. Preferred salts of phosphinic acids are aluminum, calcium, or zinc salts, more preferred is aluminum.

The most preferred phosphinate is aluminum diethyl phosphinate.

Preferably, the flame retardant is selected from derivatives of phosphinic acid, salts with organic or inorganic cation or organic esters. Organic esters are derivatives of phosphinic acid in which at least one oxygen atom directly bound to the phosphorus is esterified with an organic residue. In one preferred form the organic ester is an alkyl ester, in another preferred form an aryl ester. All hydroxy groups of phosphinic acid are particularly preferentially esterified.

Phosphinic acid esters have the general formula R1R2(P=O)OR3, all three organic groups R1, R2 and R3 being identical or different. The radicals R1, R2 and R3 are either aliphatic or aromatic and have 1 to 20 carbon atoms, preferably 1 to 10, more preferably 1 to 3. Preference is given to at least one of the radicals aliphatic, all radicals are preferred aliphatic, especially R1 and R2 are ethyl radicals. R3 is also an ethyl radical or a methyl radical. In a preferred form, R1, R2 and R3 are simultaneously ethyl radicals or methyl radicals.

Phosphinates, i.e. the salts of phosphinic acid, are also preferred. The radicals R1 and R2 are either aliphatic or aromatic and have 1 to 20 carbon atoms, preferably 1 to 10, more preferably 1 to 3. Preferred is at least one of the radicals aliphatic, preferred are all radicals aliphatic, especially R1 and R2 are ethyl radicals. Preferred salts of phosphinic acids are aluminum, calcium or zinc salts, more preferably aluminum or zinc salts. Diethyl aluminum phosphinate is a preferred form.

Suitable are also alkali metal hypophosphite salts, such as alkali metal salts, alkaline earth metal salts, aluminum salts, titanium salts and zinc salts, in particular aluminum hypophosphite salts and calcium hypophosphite salts.

According to another preferred embodiment, the beads comprise a thermoplastic polyurethane composition as described above, whereby the phosphorus-containing flame retardant (F2) is a phosphinate.

According to another preferred embodiment, the beads comprise a thermoplastic polyurethane composition as described above, where the phosphinate is selected from the group consisting of aluminum phosphinates or zinc phosphinates.

The organic phosphates involve salts with an organic or inorganic cation or involve the esters of phosphinic acid. Preferred esters of phosphinic acid are the diesters of alkyl- or phenylphosphinic acids. The alkylr est is preferably selected from the group consisting of methyl-, ethyl-, propyl-, butyl-, pentyl, heptyl-, octyl, nonyl-, and decyl-radical.

In yet another preferred embodiment the beads comprise a thermoplastic polyurethane composition as described above, where the phosphinate is selected from the group consisting of aluminium phosphinates or zinc phosphinates.

Furthermore, piperazine pyrophosphate and polypiperazine pyrophosphate can be used as flame retardant. The use of piperazine based flame retardants is in principle known from the state of the art, for example as disclosed in WO 2012/174712 A1.

The flame retardant is used in the form of single substance or in mixtures of several substances of either the same kind of flame retardants or different kind of flame retardants in the composition.

### Auxiliary

In preferred embodiments a further auxiliary or additive is added to the composition. Preferred examples include surface-active substances, fillers, flame retardants, nucleating agents, oxidation stabilizers, lubricating and demolding aids, dyes and pigments, if necessary, stabilizers, preferably against hydrolysis, light, heat or discoloration, inorganic and/or organic fillers, reinforcing agents and/or plasticizers.

Stabilizers in the sense of this invention are additives which protect a plastic or a plastic composition against harmful environmental influences. Preferred examples are primary and secondary antioxidants, sterically hindered phenols, hindered amine light stabilizers, UV absorbers, hydrolysis inhibitors, quenchers and flame retardants. Examples of commercial stabilizers are given in Plastics Additives Handbook, 5th Edition, H. Zweifel, ed., Hanser Publishers, Munich, 2001 ([1]), p.98-S136.

In a preferred embodiment, the UV absorber has a number average molecular weight greater than 0.3 × 10³ g/Mol, in particular greater than 0.39 × 10³ g/Mol. Furthermore, the preferred UV absorber has a molecular weight not exceeding 5 × 10³ g/Mol, particularly preferred not exceeding 2 × 10³ g/mol.

The UV absorber is preferably selected from the group consisting of cinnamates, oxanilides and benzotriazole, or is a mixture thereof, particularly suitable as UV absorbers is benzotriazole. Examples of particularly suitable UV-absorbers are Tinuvin^{®} 213, Tinuvin^{®} 234, Tinuvin^{®} 312, Tinuvin^{®} 571, Tinuvin^{®} 384 and Eversorb^{®} 82.

Preferably the UV absorbers is added in quantities of 0.01 wt.% to 5 wt.% based on the total weight of the compositon, preferably 0.1 wt.% to 2.0 wt.%, in particular 0.2 wt.% to 0.5 wt.%.

Often a UV stabilization based on an antioxidant and a UV absorber as described above is not sufficient to guarantee a good stability of the composition against the harmful influence of UV rays. In this case, in addition to the antioxidant and/or the UV absorber, or as single stabilizer, a hindered-amine light stabilizer (HALS) is be added to the composition.

Examples of commercially available HALS stabilizers can be found in Plastics Additive Handbook, 5th edition, H. Zweifel, Hanser Publishers, Munich, 2001, pp. 123-136.

Particularly preferred hindered amine light stabilizers are bis-(1,2,2,6,6-penta¬methylpiperidyl) sebacat (Tinuvin^{®} 765, Ciba Spezialitätenchemie AG) and the condensation product of 1-hydroxyethyl-2,2,6,6-tetramethyl-4-hydroxypiperidine and succinic acid (Tinuvin^{®} 622). In particular, the condensation product of 1-hydroxyethyl-2,2,6,6-tetramethyl-4-hydroxypiperidines and succinic acid (Tinuvin^{®} 622) is preferred, if the titanium content of the finished product is less than 150 ppm, preferably less than 50 ppm, in particular less than 10 ppm, based on the components used.

HALS compounds are preferably used in a concentration of from 0.01 wt.% to 5 wt.%, particularly preferably from 0.1 wt.% to 1 wt.%, in particular from 0.15 wt.% to 0.3 wt.%, based on the total weight of the compositon.

A particularly preferred UV stabilization contains a mixture of a phenolic stabilizer, a benzotriazole and a HALS compound in the preferred amounts described above.

Further information on the above-mentioned auxiliaries and additives can be found in the technical literature, e.g. Plastics Additives Handbook, 5th edition, H. Zweifel, ed., Hanser Publishers, Munich, 2001.

Preferred examples for producing beads comprising expanded thermoplastic polyurethane are mentioned e.g. in WO 1994/20568, WO 2007/082838, WO 2014/150122 or WO 2013/153190 A1, herein incorporated by reference.

The beads comprising the expanded thermoplastic polyurethane composition preferably have a closed surface. Using expanded beads for the molded bodies has the advantage, that the weight of the body is significantly reduced compared to a body with compact beads. The bulk density of the expanded beads is preferably between 50 g/L and 500 g/L. Dependent on the load of the molded body the shore hardness must be increased to result in the same stability compared to compact material.

In another preferred embodiment a molded body, preferably according to any of the precedent embodiments or their preferred embodiments the beads are attached to one another by welding, or by gluing with an adhesive. In a preferred embodiment the welding, or gluing takes place under atmospheric pressure.

For gluing the particles comprising thermoplastic polyurethane, any adhesive can be used. The adhesive preferably is compatible with the polyurethane composition comprised in the particle and the respective use of the molded body.

In a preferred embodiment the adhesive is selected from the group of 1-component or 2-component polyurethane, urea, melamine, formaldehyde and epoxy polymers. 2 component adhesive based on polyurethane are outlined in DE 1 955 267, and DE 1 720 059, and also DE 2 156 225 and DE 2 215 893 describe the use of two-component polyurethane binders for bonding of elastic particles. These adhesive are also applicable for elastic beads. Another preferred 2 component polyurethane adhesive is outlined in WO 2019/076843. Preferred 1-component adhesives are outlined in DE 2021 682, DE 2 228 111, DE 2 427 897, DE 2 447 625, and DE 2 821 001. They are overall moisture curing one -component polyurethane binders. A preferred 1-component polyurethane adhesive is outlined in PCT/EP 2020/082002. All the references cited outlining preferred embodiments, are herein incorporated by reference.

In a further preferred embodiment the resin is solvent based. This makes the homogenous spread of the adhesive easier. More preferred is a solvent based polyurethane adhesive. Yet another preferred adhesive is a moisture curing adhesive, preferably those based on cyanoacrylates or urethanes. 1-component polyurethane adhesives are synonym and outlined above. This allows the adhesive homogenously to spread on the surface of the beads, fill into the mold an then glue by moisturizing the mold, preferably with water.

In preferred embodiments the adhesive is an elastic adhesive. This is important, when the molded body is elastic as well. A preferred elastic polyurethane adhesive and its application methods is further outlined in US 2009/318607, herein incorporated by reference.

1-component polyurethane adhesive, 2 component polyurethane adhesive as well as elastic polyurethane adhesive are also referred to as adhesive being the reaction product of at least an isocyanante and a polyol.

In a further preferred embodiment, the adhesive is the reaction product of at least an isocyanate and a polyol. This allows a better recycling of the molded body. In a more preferred embodiment, the building components of the polyurethane beads and those of the polyurethane of the adhesive are similar, preferably the same. Similar in a preferred embodiment means that the monomers of the isocyanate reactive polyol are at least partly identical. This makes recycling easier. More preferred the isocyanate and the chain extender are the same.

In preferred embodiment the adhesive is selected form the above preferences, but is not Elastan^{®} CC 8004
The adhesive must be brought to the surface in an amount which allows to connect the particles tightly as required by the specific use and at the same time the adhesive must be as less that the channels between the parts must not be blocked. The adhesive, the viscosity as well as the amount must be adapted also based on the material further used in the polyurethane composition. The surplus of adhesive in preferred embodiments is removed by putting the beads separately on a mold before the beads are filled into the mold.

In a preferred embodiment the particles are attached to one another by welding. Welding comprises cold welding as well as hot welding. Cold welding means, that the surface of the thermoplastic polyurethane particles, is moistened with an appropriate solvent, which penetrates into the particles comprising thermoplastic polyurethane. After the solvent is removed the particles are attached to one another. Preferred solvents for cold welding are selected from the group of aromatic hydrocarbons, alky halids, dimethyl sulfoxide, dimethylformamide, or mixtures thereof. In one preferred embodiment the beads are moistened with the solvent or the adhesive before they are fed to the mold where they are molded to the molded body. This allows a controlled, thin and homogeneous spreading of the solvent or the adhesive on the surface of the beads. It is important, that the viscosity of the solvent especially of the adhesive is adapted so that the surface of the beads is evenly covered. The moisturing can take place in a bath, by spraying, or by spraying in a fluidized bed.

In another preferred embodiment the beads are fed to the mold and the solvent or the adhesive is fed into the mold. In this embodiment it is important to have enough holes in the mold with a diameter smaller than the beads, with allow to fill the solvent or the adhesive into the mold and then remove the surplus of solvent, respectively adhesive. The surplus of solvent or adhesive can be washed out with another solvent or can be poured out with a gas, preferably with air. If the gas or the solvent is washed through the mold in a distinct direction the channels allowing gas or fluids bypass the beads in the molded body will have these preferred directions as well. This may be advantageous for some specific applications.

Also, the filling of the mold in preferred embodiments is supported by a gas or a fluid stream. If the cold-welding method is applied, the fluid stream preferably is the same as the fluid used for cold welding. Cold welding is described below. In other application the use of gas is preferred. The gas is either air or an inert gas. A preferred inert gas is nitrogen.

The methods using an adhesive or a solvent have the advantage that the form of the beads as such is stable in the mold. The channels allowing gas or fluids to bypass may be blocked only by softening the surface too deeply or using too much adhesive.

Hot welding means that the particles are heated in a way, that the surface, preferably only the surface of the thermoplastic polyurethane beads becomes sticky. Afterwards, the surface of the beads is cooled so that the beads are welded in a way a gas or a fluid may bypass the beads. In one preferred embodiment the surface of the beads is heated to become sticky before the beads are fed into the mold forming the molded body. The thermoplastic polyurethane beads become sticky at temperatures well below the meling point of the respective thermoplastic polyurethane. In preferred embodiments "well below the melting point means, maximal 20 °C below the melting point, preferably maximal 10 °C below, and more preferably maximal 5 °C below. In a preferred embodiment the melting point is the Vicat temperature measured according to DIN EN ISO 306.

The heat in another preferred embodiment may be even be as high as the melting temperature of the respective thermoplastic polyurethane, in other preferred embodiments even higher. Higher here means, that the temperature preferably is up to 20 °C higher than the melting point, more preferably up to 10 °C higher, more preferably up to 5 °C higher. If the heat is beyond the melting point of the respective thermoplastic polyurethane. It is important that the beads are heated only as short as that only the surface melts. It is important, that the body of the beads remains stable, because otherwise the channels allowing gas or fluids to bypass the beads will be blocked.

The heat is applied to the beads preferably with a heater, by hot air. or by radiation, preferably by infrared radiation. In preferred embodiments the heat is applied to the beads before they are fed to the mold where they are formed to become the molded body. In one preferred embodiment the heat is applied to the beads in a fluidized bed. This allows to heat the beads filling one mold to the same temperature. In other preferred embodiments the beads are continuously heated and then fed into the mold. Until the mold is filled. This process also allows a stepwise or slow filling of the mold which is important for reducing deformation of the basis of large bodies by the load of the beads.

In other preferred embodiments the beads are fed to the mold where they are molded to a molded body. Then the heat is applied to the form, preferably with a hot medium, preferably hot air. For this embodiment the mold must have holes smaller than the diameter of the beads to allow the hot medium to come into the mold. It is preferred to have plenty of holes to allow the hot medium heating the beads in the mold homogenously. In a preferred embodiment, tubes are laid into the mold. This allows the hot medium to heat the beads evenly through the molded body. The tubes must be from material to being glued or welded with the beads to be removable. In other embodiments the tubes may remain in the molds.

In a preferred embdoment the holes and, if applicable, the tube in a preferred embodiment is used for appiying a cooling medium to the molded body after welding the beads. This method also allows to keep the channels of the molded body open. In preferred embodiments the cooling medium is air or water.

In one preferred embodiment where the beads comprise thermoplastic polyurethane and are expanded beads, it is preferred that the beads do not comprise blowing agent in an amount that would expand the beads when heated. Whereas with small amount of remaining blowing agent, the channels between the beads may be narrowed to s specific size. This is e.g. importing for adjusting the permeability of filters.

For a very homogeneous structure of the molded bodies it is important to apply the heat homogeneously to all the beads. In preferred embodiments the molds are turned during the cooling. This will avoid inhomogeneous structure and narrowing of the gas and fluid permeable channels between the beads.

In other preferred embodiments the the thermoplastic polyurethane beads comprise a mixture of two polyurethanes, a polyurethane 1 and a polyurethane 2, wherein the melting point of the polyurethane 1 is at least 10 °C higher than the melting point of the polyurethane 2, more preferable at least 10 ° , more preferable at least 15 °C, more preferable at lest 20 °C. This allows that the structure of the beads remains mainly by the higher melting polyurethane whereby the lower melting polyurethane allows a tight connection of the beads. This embodiment is especially useful when the beads are expanded beads.

In a preferred embodiment the molded body is produced by feeding freshly produced polyurethane particles into the mold. The fresh produced polyurethane particles are still either reactive or warm enough to get connected with the other particles. This process has the advantage, that it either reduces or even dispenses with the need for using adhesive or it reduces the amount of energy necessary for producing the molded part, especially when welding is applied. When a layer is molded it is preferred to feed the beads on a belt.

The mold of the molded body is a open mold. Open mold means that a medium can be poured through the mold, preferably a gas or a fluid. This allows in a preferred embodiment to apply a medium which keeps open spaces between the beads, also referred to as channels.

The beads comprising thermoplastic polyurethane are, in a preferred embodiment produced batchwise or continuously.

For producing polyurethane the starting components are mixed at a temperature of from 15 °C to 35 °C, more preferably from 20 °C to 30 °C. The building components are metered by a highpressure machine and mixed in a mixing head.

A preferred process is the reaction extruder process, the belt line process, the "one shot" process, preferably the "one-shot" process or the reaction extruder process, most preferably the reaction-extruder process. The belt line process is applicable for thermoplastic polyurethane or may be used to produce particles only.

These processes are used either by directly mixing the building components or alternatively by applying the prepolymer process.

Polyisocyanate prepolymers are obtainable by reacting above-described polyisocyanate in excess, at temperatures of 30 °C to 100 °C, preferably at 8 x10 °C, with the compound reactive isocyanate, preferably the polyol. In a preferred embodiment a blowing agent, an auxiliary, or a catalyst, or a mixture thereof is added. In a preferred embodiment, where the polyurethane is thermoplastic the blowing agent, the flame retardant or other auxiliary is added in a second step.

In the "one-shot" process, the building components diisocyanate and diol, and in a preferred embodiment also the chain extender if applicable water, blowing agent and/or crosslinker, are mixed with each other.

In the extruder process, the building components diisocyanate and diol, in a preferred embodiment also the chain extender, and, in further preferred embodiments, also the catalyst and/or the auxiliary are mixed. The mixing in the reaction extruding process is done preferably at temperatures between 100°C and 280°C, preferably between 140°C and 250°C. The polyurethane, preferably thermoplastic polyurethane obtained, preferably is in the form of beads.

A twin-screw extruder is preferred, as the twin-screw extruder operates with positive conveying and thus allows a more precise setting of the temperature and output quantity on the extruder.

The mixture comprising the thermoplastic polyurethane, eventually at least one auxiliary and in preferred embodiments a further polymer is also referred to as composition.

In a preferred embodiment the beads are non-expanded thermoplastic polyurethane beads ("compact polyurethane composition"), in another preferred embodiment the beads are expanded. The blowing agent preferably is added after the building components have reacted. This takes place in an extruder or is done batchwise by impregnating the compact thermoplastic polyurethane beads with a blowing agent.

The beads comprising expanded polyurethane in a preferred embodiment have a closed surface. This is especially preferred for applications where the molded body is in contact with fluids, to avoid the fluid to penetrate into the particle. In other preferred applications, when the molded body is used e.g. as filter, as sound insulator, or as reservoir for a fluid, it is preferred to have a open cell structure.

Expanded beads have the advantage, that less material is necessary compared with compact materials. At the same time the insulating effect, preferably the thermal insulating effect is better compared with compact particles.

The hardness of the molded body preferably is measured according to ASTM D 2240 and is dependent on the specific use. Very soft cushions, e.g. for seats, saddles etc. have Shore A values between 15 Shore A to 60 Shore A. Molded bodies bearing loads preferably have Shore A hardness between 50 Shore A and 100 Shore A. For high loads molded bodies in preferred embodiment have up to 60 Shore D. It is understood, that the Shore hardness of the moldes bodiy highly depends on the bulk density of the beads, the grade the beads are expanded, the additives used in the polyurethane composition, eventually further polymers that are used, the degree of expansion of the beads., e.g. a polyuethen with a compact Shore D hardness, when expanded has a shore hardnes in the range of 70 to 90 Shore A, which is preferred for a lot of applications. Also the adhesive as such, if used, as well as the amount of adhesive will affect the hardness of the molded body.

The bulk density of the beads comprising expanded thermoplastic polyurethane preferably is from 50 g/L to 200 g/L, preferably from 60 g/L to 180 g/L, particularly preferably from 80 g/L to 150 g/L. Bulk density is measured preferably with the method according to DIN ISO 697, wherein a vessel with volume of 10 L is used instead of a vessel with a volume of 0.5 L.

As stated above, in a preferred embodiment the molded body according to any of the precedent embodiments or one of their preferred embodiments is produced in the form of a layer. A preferred layer is a belt, cladding, coating, cushion, damping element, filter, insulating blanket, laminate, mattress, middle sole of a shoe, packaging material, pillow, protective film, , sport mat, shoe sole, laminate damping, saddle underlayer, table top, or roofing.

In another preferred embodiment the layer in a second step is formed to the molded body of use, derived from this layer. In a preferred embodiment this molded body is a cover, preferably a cover for a mobile phone.

An insulating blanket layer is also referred to as insulating blanket. The layer preferably is a rectangular or is trapezoid element. Preferably the element has interlocking devices allowing two elements being tightly connected. In a preferred embodiment the layer comprises beads with expanded polyurethane. Expanded thermoplastic polyurethane improves the insulating effect of the molded body and at the same time reduces weight of the molded body.

In a preferred embodiment the layer comprises beads comprising thermoplastic polyurethane, more preferably beads comprising expanded thermoplastic polyurethane. These layers have the advantage, that they can be easily produced as outlined above. A further advantage is, that they can be easily attached to a surface by just heating the bottom of the layer until the bottom becomes at least tacky or even molten and then attach the bottom of the layer to the surface. This makes additional adhesive superfluid. In addition, if the surface is uneven, this process allows the layer to permanently cling to the surface. This is especially advantageous if the surface is a roof. For a roof it is preferred to have elastic polyurethane. This is advantageous since the layer will easily match to the roof surface. The layer may be easily applied on a roof. In a preferred embodiment the layer comprises additives that avoid growth of fungus or moss. In one preferred embodiment the molded body comprises copper particles, preferably to avoid growth of fungus or moss. If the roof is a flat roof, with the layer the roof can be easily isolated and in preferred embodiments the roof is ready for walking on it, without destroying the water impermeable layer of the roof. This is especially the case when the layer has a Shore A hardness between 60A and 100 A and the polyurethane is elastic. Regular plates for flooring, preferably those having water permeability at least at their joint can easily be fixed on the layer. Thus, a patio can be established on the top of a flat roof of any existing building as long as the roof bears the load. On a roof the layer may be further secured by means for securing, especially against wind, e.g. with a net or by covering the insulating blanket with a bed of pebbles. In addition, this construction protects the water impermeable layer of the roof, when stepped on.

The insulating blankets can also be used on pitched roofs. The insulating blankets, in a preferred embodiment are fixed between a solar panel and the roof. This has the advantage, that the fixation of the solar panel fixes the insulating blankets. Advantages of a solar panel thus can be easily combined with the advantage of the insulating blankets. In one preferred embodiment they are fixed between the bricks.

The production of the layer is either continuously or batchwise. In preferred embodiments cutting will be done by means for cutting. Preferred means for cutting are devices for thermal cutting, for mechanical cutting, for cutting with radiation, preferable laser, or water cutting. The continuous production comprises at least the steps of forming a layer in a mold and cutting the layer into the respective element, preferably comprising the interlocking devices.

In a preferred embodiment the mold is a beltline. In a further preferred embodiment the beltline has a long plate along the edges to form the sides of the layer produced on the belt. Another preferred embodiment the layer preferably the insulating blanket layer is produced batchwise by forming the respective element. In a preferred embodiment comprising the interlocking devices, directly in a mold,

In a preferred embodiment the layer, preferably the insulating blanket layer to one of the precedent embodiments or one of their preferred embodiments has a thickness of more than 5 cm, preferably more than 10 cm, more preferably more than 12 cm, more preferably more than 15 cm, more preferably more than 18 cm, most preferably more than 20 cm.

In another preferred embodiment according to any of the precedent embodiments, or one of their preferred embodiments the water permeability is more than 20 mm/h, preferably more than 50 mm/h, more preferably more than 100 mm/h, and preferably more than 150 mm/h measured according to DIN EN 12616.

Another aspect of this invention and a further embodiment is the process for producing a molded body, preferably according to any of the precedent embodiments or their preferred embodiments by at least the following steps a and b:
a) producing polyurethane beads, with preferred embodiments as outlined above by a production process
b) form the body in a mold and attach the beads to each other

In a preferred embodiment attaching the beads is done by welding, or gluing with an adhesive as outlined above with respective preferences.
In one preferred embodiment of the process the beads, preferably the expanded beads, being the direct outpout of the production process of the beads are fed directly for forming the molded body. Direct means that either the reaction process of the building components has not terminated and is used for attaching the beads in the mold, and/or, if the beads are thermoplastic, the yet hot beads from the production process are filled into the mold. The advantages are outlined above.

Another aspect of the invention is the use of a molded body according to any of the embodiments as outlined above or their preferred embodiments, or derived from the process embodiments or their preferred embodiments as outlined above, for damping, absorption or insulation, preferably insulation more preferably thermal insulation or acoustic insulation, more preferably thermal insulation, even more preferable of a roof, most preferably thermal insulation of a flat roof.

### Examples

### 1. Example - Materials

The examples and comparative tests utilized the following components as defined in Table 1:

**Table 1**

| Code | Composition |
|---|---|
| TPU1 | thermoplastic polyether polyurethane with 80 Shore A based on polytetrahydrofuran MG 1 × 10³, 1,4-butanediol, 4,4'-methylene diphenyl isocyanate (MDI), diameter 3- 5 mm |
| TPU 2 | Thermoplastic polyurethane with 85 Shore A, based on polyeswterpolyol with a OH number of 56 derived from adipic acid, 1,4-butandiol and 1,6-hexandiol, 4,4'methylene diphenyl isocyanate, , diameter 3- 5 mm |
| TPU 3 | thermoplastic polyurethane with 90 Shore A based on polytetrahydrofuaran with a number average molecular weight of 1 × 10³ g/Mol, 1,4-butandiol and 4,4'methylyen diphenyl isocyanate (MDI), , diameter 3- 5 mm |
| e-TPU 1 | expanded beads based on thermoplastic polyurethane, obtained by expanding pelletized, blowing agent-containing TPU1 under pressure and high temperature, bulk density 110 g/l |
| e-TPU 2 | expanded beads based on thermoplastic polyurethane, obtained by expanding pelletized, blowing agent-containing TPU 2 under pressure and high temperature, bulk density 150 g/l |
| e-TPU 3 | expanded beads based on thermoplastic polyurethane, obtained by expanding pelletized, blowing agent-containing TPU 3 under pressure and high temperature, bulk density 250 g/l |
| AS | 2-component polyurethane adhesive system (AS) from prepolymer and polyol as outlined below |

Thermoplastic polyurethanes of this table are available from BASF Polyurethanes Lemförde, Germany

Starting materials of the adhesive system (AS):
Prepolymer: isocyanate prepolymer composed of 36 parts by weight of a diphenylmethane diisocyanate with NCO content of 33.2% and a polyetherol based on propylene oxide with OH number of 56 mg KOH/g. The NCO content of the isocyanate prepolymer is 10%.
Polyol: 500 g of an adduct composed of polyisobutylene whose molar mass is about 550 g/mol and maleic anhydride (PIBSA 550), 608 g of a polyetherol based on trimethylolpropane, which is grafted randomly with 12 ethylene oxide units, and 0.04 g of dibutyltin dilaurate are weighed into a 4 I glass flask equipped with stirrer, internal thermometer, and inclined condenser with vacuum connection, and heated to 160°C at a pressure of 4 mbar, under stirring. Within a period of about one hour, the temperature is slowly increased to 180°C. The water produced during the reaction is removed by distillation. The reduction in acid number is regularly monitored until the value achieved is below 10 mg KOH/g. The product is then cooled and ready for use.

### 3. Example - Molded body with adhesive:

1,5 L of the beads of table 1 either expanded or compact are mixed with the polyol at room temperature for about 2 minutes (until the beads are uniformly wetted). In a second step, by addition of the isocyanate prepolymer and further mixing until the beads are uniformly covered with the prepolymer.

The mixture is then poured to aluminum frame of dimensions 10 × 10 × 10 cm until it is brim full The frame is loosely on a even metal sieve to allow surplus of adhesive to flow out of the frame. The resultant cube is hardened for 7 days at room temperature and 50% relative humidity.

### 4. Example - Molded body with thermal bonding

The beads according to table 1 are filled in an aluminum frame having dimensions of 10 × 10 × 10 cm. The fram is filled to the rim with the respective TPU beads. The frame is loosely on a even aluminum plate. The frame on the aluminum plate (mold) is put into an oven and heated for 30 min at 180 °C. The mold is removed from the oven and stored at room temperature for 3 days. The beads are molded to cubes after being removed from the mold.

### 5. Example - Molded body with thermal bonding (Vicat Temperature)

The Vicat temperature of test plates made from TPU 1, 2 and 3 from table 1 is measured according to DIN EN ISO 306.

The beads according to table 1 are filled in an aluminum frame having dimensions of 10 × 10 × 10 cm is filled to the rim with the respective TPU beads of table 1. The frame is loosely on an even aluminum plate. The frame on the aluminum plate (mold) is put into an oven and heated for 30 min 5 °C below the Vicat temperature of measured for respective TPU. The molds are removed from the oven and stored at room temperature for 3 days. The beads are molded to cubes after being removed from the mold.

### 6. Example - Measuring water permeability

The molded cubes from Example 3, 4 and 5 are inserted into a frame of 10 × 10 × 30 cm, the bottom of the cube is in line with the bottom the frame. The frame with the cube is placed on a sieve with a diameter of 1 cm over a basin. Then 1 L of water is poured on the top of the molded body in the frame and the time measured until the water is trickling through the molded body. The end point is when the surface of the cube shows up over the surface of the water.

The water permeability of the cubes thus measured is well beyond 150 mm/h.

## Claims

1. Use of a molded body for a belt, cable connector, cable plugs, cable sleeves, chair, cladding, coating, cushion, damping element, escalator handrail, filter, gasket, hand rail for passenger conveyers, hose, insulating blanket, laminate, lounger, mattress, middle sole of a shoe, non woven fabric, packaging material, pillow, phone cover, plug connector, protective cord, protective film, protective hoses, roller, roofing, seat, sport mat, shoe, shoe sole, strap, laminate damping, profiles, plug-in connection, saddle, table, trailing cable, wherein the molded body comprises thermoplastic polyurethane beads, which
i. Which can be expanded or not; and
ii. which are directly attached to one another allowing a gas or a fluid to bypass the beads.

2. Use according to claim 1, wherein the beads are attached to one another by welding, or by gluing with an adhesive.

3. Use of a molded body according to claim 1 or 2 for roofing, wherein the beads are expanded.

4. Use according to claim 3, **characterized in that** the molded body is fixed on the roof of a building.

5. Use according to claim 3 or 4, **characterized in that** the building roof is a flat roof.

6. Molded body comprising non-expanded thermoplastic polyurethane beads, wherein the beads are directly attached to one another allowing a gas or a fluid to bypass the beads.

7. Molded body according to claim 6, wherein the beads are attached to one another by welding or by gluing with an adhesive.

8. Process for producing a molded body according to any of claims 1 to 7 by at least the following steps a and b:
a) producing polyurethane beads by a production process
b) form the body in a mold and attach the beads to each other.

9. Process according to claim 8, wherein the output of the production process of the beads is directly used for forming the molded body.

10. Process according to one of the claims 8 to 9 wherein the beads are welded, or glued with an adhesive to each other.
